Europäisches Patentamt

European Patent Office

Office européen des brevets

(19)

(11) Veröffentlichungsnummer: **0 246 455**
**A2**

(12) # EUROPÄISCHE PATENTANMELDUNG

(21) Anmeldenummer: 87105769.1

(22) Anmeldetag: 18.04.87

(51) Int. Cl.4: **C08G 18/42** , C08G 63/42

(30) Priorität: 24.04.86 DE 3613875

(43) Veröffentlichungstag der Anmeldung:
25.11.87 Patentblatt 87/48

(84) Benannte Vertragsstaaten:
AT BE CH DE ES FR GB IT LI NL SE

(71) Anmelder: BASF Aktiengesellschaft
Carl-Bosch-Strasse 38
D-6700 Ludwigshafen(DE)

(72) Erfinder: Marx, Matthias, Dr.
Feuerhausstrasse 11 a
D-8080 Fuerstenfeldbruck(DE)
Erfinder: Jaehme, Joachim, Dr.
21149 Shurley Drive
Grosse Ile. Michigan 48138(US)
Erfinder: Streu, Joachim, Dr.
Am Huettenwingert 32
D-6706 Wachenheim(DE)

(54) Verfahren zur Herstellung von Polyester-polyolen.

(57) Zur Herstellung von Polyester-polyolen mit einer Säurezahl von kleiner als 1, einer Hydroxylzahl von ungefähr 20 bis ungefähr 400 und einer Funktionalität von zweckmäßigerweise 2 bis 3 werden Polycarbonsäuren und/oder deren Anhydride und mehrwertige Alkohole, vorteilhafterweise in Abwesenheit von üblichen Veresterungskatalysatoren bei Temperaturen von 150° bis 250°C, gegebenenfalls unter vermindertem Druck bis zu einer Säurezahl von 20 bis 5 polykondensiert und die erhaltenen Polykondensate danach pro Carboxylgruppen mit 1 bis 5 Molen Alkylenoxid, z.B. 1,2-Propylenoxid und/oder vorzugsweise Ethylenoxid, in Gegenwart mindestens eines tertiären Amins aus der Gruppe N-Methylimidazol, Diazabicyclo[2,2,2]octan, Diazabicyclo[5,4,0]undec-7-en und Pentamethyl-diethylentriamin als Katalysator, zweckmäßigerweise in einer Menge von 0,001 bis 1,0 Gew.-%, bezogen auf das Polykondensatgewicht, vorteilhafterweise bei Temperaturen von 100° bis 170°C und unter einem Druck von 1 bis 10 bar alkoxiliert.

## Verfahren zur Herstellung von Polyester-polyolen

Die Herstellung von Polyester-polyolen und deren Verwendung zur Herstellung von Polyurethankunststoffen nach dem Polyisocyanat-polyadditionsverfahren ist bekannt und wird in zahlreichen Literatur- und Patentpublikationen beschrieben. Verweisen möchten wir beispielsweise auf das Kunststoff-Handbuch, Band 7, Polyurethane, 1. Auflage, 1966, herausgegeben von A. Höchtlen und R. Vieweg, und 2. Auflage 1983, herausgegeben von G. Oertel, Carl Hanser Verlag, München, Wien.

Die Polyester-polyole werden üblicherweise aus Polycarbonsäuren und mehrwertigen Alkoholen durch Schmelzkondensation in Gegenwart von Säuren oder Metallsalzen als Katalysator hergestellt. Zweckmäßigerweise wird die Polykondensation unter vermindertem Druck durchgeführt, um das bei der Kondensation entstehende Wasser aus der Reaktionsmischung abzudestillieren und die Gleichgewichtsreaktion hierbei in Richtung der Polyesterbildung zu verschieben. Auf diese Weise können beispielsweise Polyester-polyole mit Säurezahlen größer als 5 in relativ kurzen Reaktionszeiten hergestellt werden.

Für viele Anwendungszwecke, beispielsweise zur Herstellung von Polyurethanen, ist jedoch notwendig, daß die Polyester-polyole einheitliche Molekulargewichte und niedere Säurezahlen aufweisen. Zur Herstellung von Polyester-polyolen mit Säurezahlen kleiner als 2, insbesondere kleiner als 1, sind nicht nur lange Reaktionszeiten und hohe Reaktionstemperaturen erforderlich, sondern nachteilig ist auch, daß sich die Produkte aufgrund von Zersetzungsreaktionen dunkel färben und bei der Umsetzung mit Isocyanaten unterschiedliche Reaktionszeiten besitzen. Um diese Nachteile zu beseitigen, wurde vorgeschlagen, die Kondensation in Gegenwart von Katalysatoren, beispielsweise Eisen-, Cadmium-, Kobalt-, Blei-, Zink-, Antimon-, Magnesium-, Titan- und Zinnkatalysatoren, in Form von Metallen, Metalloxiden oder -salzen durchzuführen. Diese Verbindungen katalysieren jedoch nicht nur die Polyesterherstellung, sondern sie beschleunigen auch die hydrolytische Zersetzung der Polykondensationsprodukte in Gegenwart von Luftfeuchtigkeit. Nachteilig ist ferner, daß sich die in den Polyesterpolyolen enthaltenen Katalysatorrückstände bei der Polyurethanherstellung durch Bildung von Nebenreaktionen, wie Allophanat- oder Biuretbildung sowie Isocyanattri- und -polymerisierung, oder durch zusätzliche Katalysierung oder Hemmung der Polyaddition störend auswirken können.

Nach Angaben der DE-OS 2 316 293 (US 3 907 863) können Polyester-polyole mit Säurezahlen kleiner als 1 katalysatorfrei in relativ hohen Raum-Zeit-Ausbeuten hergestellt werden. Nach diesem Verfahren werden Polycarbonsäuren und mehrwertige Alkohole bei Temperaturen von 150 bis 300 °C polykondensiert, wobei dem Veresterungsgemisch bei Säurezahlen kleiner als 480 destillierbare Dialkohole oder Mischungen aus Di- und Monoalkoholen oder bei Säurezahlen kleiner als 60 Monoalkohole einverleibt werden und die Polykondensation unter gleichzeitigem Abdestillieren des überschüssigen Alkohols zu Ende geführt wird. Durch die Verwendung von Monoalkoholen kann jedoch nicht nur die Säurezahl, sondern gegebenenfalls auch die Funktionalität der Polyester-polyole vermindert werden.

Nach Angaben der DE-AS 1 248 660 (GB 1 139 634) können Glykolmonoester hergestellt werden durch Veresterung von organischen Mono- und Polycarbonsäuren mit Alkylenoxid in Gegenwart von Thioethern als Katalysator. In der EP-PS O 087 517 (US 4 452 997) wird ferner ein Verfahren zur Herstellung von Polyester- und/oder Polyesterpolyether-polyolen beschrieben, bei dem di-bis hexafunktionelle Polyether-polyole mit Hydroxylzahlen von 30 bis 200 mit mindestens einem Carbonsäureanhydrid zu einem Carbonsäurehalbester umgesetzt und dieser danach mit mindestens einem Alkylenoxid in Gegenwart von 0,001 bis 0,1 Molen mindestens eines Thiodialkylenglykols pro Carboxylgruppe des Carbonsäurehalbesters oxalkyliert wird. Zur Verbesserung dieses Verfahrens wird gemäß EP-OS O 124 070 die Umsetzung der di-bis hexafunktionellen Polyether-polyole mit Hydroxylzahlen von 15 bis 250 mit mindestens einem Carbonsäureanhydrid in Gegenwart von N-Methylimidazol, Triethylendiamin und/oder Triphenylphosphin durchgeführt und danach der erhaltene Carbonsäurehalbester mit mindestens einem Alkylenoxid in Gegenwart von N-Methylimidazol, Triethylendiamin, Triphenylphosphin, Thio-dialkylenglykol oder einer Mischung aus mindestens zwei der genannten Verbindungen als Katalysator oxalkyliert.

Die genannten europäischen Patent- bzw. Offenlegungsschriften enthalten jedoch keine Hinweise hinsichtlich einer raschen Reduzierung der Säurezahl von durch Schmelzkondensation hergestellten Polyester-polyolen.

Die Aufgabe der vorliegenden Erfindung bestand darin Polyester-polyole mit einer Säurezahl kleiner als 1 in einer im Vergleich zu bekannten Verfahren kürzeren Zeit, d.h. in höheren Raum-Zeit-Ausbeuten, herzustellen.

Diese Aufgabe konnte überraschenderweise gelöst werden durch Schmelzkondensation der Polyester-polyol-Aufbaukomponenten und anschließende Alkoxylierung der erhaltenen Polykondensate in Gegenwart spezieller Katalysatoren.

Gegenstand der Erfindung ist somit ein Verfahren zur Herstellung von Polyester-polyolen mit einer Säurezahl kleiner als 1 durch

a) Schmelzkondensation von Polycarbonsäuren und/oder deren Anhydriden und mehrwertigen Alkoholen und

b) Alkoxylierung der erhaltenen Polykondensate, das dadurch gekennzeichnet ist, daß man

i) das Veresterungsgemisch (a) bis zu einer Säurezahl von 20 bis 5 polykondensiert und

ii) das erhaltene Polykondensat (b) mit Alkylenoxid in Gegenwart mindestens eines tertiären Amins aus der Gruppe N-Methylimidazol, Diazabicyclo[2.2.2.]octan, Diazabicyclo[5.4.0,]-undec-7-en und Pentamethyl-diethylentriamin als Katalysator alkoxyliert.

Nach dem erfindungsgemäßen Verfahren werden bei relativ niederen Reaktionstemperaturen in deutlich kürzeren Herstellungszeiten Polyesterpolyole in verbesserter Farbqualität erhalten. In Gegenwart der erfindungsgemäß verwendbaren tertiären Aminkatalysatoren werden die Carboxylgruppen der intermediär gebildeten Polykondensate mit geringen Alkylenoxidmengen selektiv carboxiliert. Je nach Art des eingesetzten Alkylenoxids, z.B. entstehen ausschließlich primäre Hydroxylgruppen bei Verwendung von Ethylenoxid oder überwiegend sekundäre Hydroxylgruppen bei Verwendung von 1,2-Propylenoxid, kann die Reaktivität der Polyester-polyole gezielt eingestellt werden. Die in geringen Mengen im Polyester-polyol verbleibenden tertiären Aminkatalysatoren beeinflussen die nachfolgende Polyisocyanat-polyaddition bei der Polyurethanherstellung nicht nachteilig.

Zur Herstellung der Polyester-polyole mit einer Säurezahl kleiner als 1 werden die üblichen aus zahlreichen Publikationen bekannten organischen Polycarbonsäuren und/oder deren Anhydride und mehrwertigen Alkohole verwendet.

Geeignet sind beispielsweise aromatische Dicarbonsäuren oder -anhydride wie Phthalsäure, Phthalsäureanhydrid, Isophthalsäure und Terephthalsäure, cycloaliphatische Dicarbonsäuren, wie z.B. die isomeren Cyclohexandicarbonsäuren, und vorzugsweise aliphatische Dicarbonsäuren mit 2 bis 12 Kohlenstoffatomen, vorzugsweise 4 bis 6 Kohlenstoffatomen im Alkylenrest wie z.B. Dodecandisäure, Undecandisäure, Sebacinsäure, Azelainsäure, Korksäure, Pimelinsäure, Adipinsäure, Glutarsäure, Bernsteinsäure, Bernsteinsäureanhydrid, Malonsäure und Oxalsäure. Die organischen Dicarbonsäuren und/oder Dicarbonsäureanhydride können einzeln oder als Gemische eingesetzt werden. Vorzugsweise Anwendung finden Mischungen aus Bern stein-, Glutar-und Adipinsäure, vorteilhafterweise in Gewichtsverhältnissen von 20 bis 35 : 35 bis 50 : 20 bis 32, und insbesondere Adipinsäure. Für manche Anwendungsbereiche kann es zweckmäßig sein, die Polyester-polyole mit höherfunktionellen Carbonsäuren oder -anhydriden, z.B. Tricarbonsäuren wie Trimellitsäure, oder olefinisch ungesättigten Dicarbonsäuren und/oder -anhydriden, wie z.B. Fumarsäure, Maleinsäure oder Maleinsäureanhydrid zu modifizieren.

Als mehrwertige Alkohole finden gegebenenfalls substituierte, olefinisch ungesättigte oder Etherbrücken aufweisende, verzweigte oder vorzugsweise lineare aliphatische Dialkohole mit 2 bis 12 Kohlenstoffatomen, vorzugsweise 2 bis 6 Kohlenstoffatomen Verwendung. Beispielshaft genannt seien 1,4-Butendiol, Diethylenglykol, Dipropylenglykol, Triethylenglykol, Tripropylenglykol, 2,2-Dimethyl-propandiol-1,3, 1,3-Butylenglykol, 2,2,4-Trimethyl-hexandiol-1,6, Ethandiol, 1,2-bzw. 1,3-Propandiol, 1,4-Butandiol, 1,5-Pentandiol, 1,6-Hexandiol, 1,8-Octandiol, 1,10-Decandiol und 1,12-Dodecandiol. Zur Herstellung von höherfuktionellen Polyester-polyolen können gegebenenfalls auch drei-und höherwertige Alkohole, wie z.B. Glycerin, Trimethylolpropan oder Trimethylolethan, mitverwendet werden. Außerdem können zur Herstellung von gemischten Polyester-polyolen Mischungen verschiedener organischer Polycarbonsäuren und/oder -anhydriden und mehrwertigen Alkoholen verwendet werden. Als aliphatische Dialkohole werden vorzugsweise verwendet: Ethandiol, 1,2-bzw. 1,3-Propandiol, 1,4-Butandiol, 1,5-Pentandiol, 1,6-Hexandiol und 2,2-Dimethylpropandiol-1,3 oder Mischungen aus mindestens zwei der aliphatischen Dialkohole.

Zur Herstellung der Polyester-polyole werden die Polycarbonsäuren und/oder deren Anhydride und mehrwertigen Alkohole vorteilhafterweise im Verhältnis von Carboxyl-zu Hydroxylgruppen von 1 : 1 bis 1,4, vorzugsweise 1 : 1,05 bis 1,2 bzw. von Anhydrid-zu Hydroxylgruppen von 1 : 2 bis 2,8, vorzugsweise 1 : 2,05 bis 2,4 in der Schmelze bei Temperaturen von 150° bis 250°C, vorzugsweise 160° bis 250°C und insbesondere 200° bis 220°C und gegebenenfalls unter vermindertem Druck in Gegenwart eines Veresterungskatalysators wie z.B. Zinnsalzen gemäß US 3 162 616 oder Tetrabutylorthotitanat oder vorzugsweise in Abwesenheit von Veresterungskatalysators bis zu einer Säurezahl von 20 bis 5, vorzugsweise von 15 bis 10 polykondensiert. Nach einer bevorzugten Ausführungsform wird das Veresterungsgemisch bei einer Temperatur von 160° bis 250°C bis zu einer Säurezahl von 80 bis 30, vorzugsweise 40

bis 30 unter Normaldruck und anschließend bis zu den obengenannten Säurezahlen von 20 bis 5, unter einem Druck von kleiner als 500 mbar, vorzugsweise von 50 bis 150 mbar, polykondensiert.

Für die Durchführung des Verfahrens und die Erzielung der damit verbundenen Vorteile ist wesentlich, daß die Schmelzkondensation nicht zu früh abgebrochen, d.h. bis zu einer Säurezahl von ungefähr 20 oder kleiner durchgeführt wird. Wird beispielsweise bei einer Säurezahl von 25 oder größer alkoxyliert, so ist der Wassergehalt des Veresterungsgemisches über Gebühr groß. Ein hoher Wassergehalt bewirkt jedoch eine Hydrolyse der Alkylenoxide, eine nachfolgende Alkoxylierung der gebildeten zweiwertigen Alkohole zu Polyoxyalkylen-diolen, verbunden mit einem erheblichen Mehrverbrauch an Alkylenoxiden, einer Veränderung der Molekulargewichtsverteilung der Endprodukte und gegebenenfalls auch deren Entmischung, falls die erfindungsgemäß hergestellten Polyester-polyole und die als Nebenprodukte gebildeten Polyoxyalkylen-diole nicht unbegrenzt mischbar sind. Das Veresterungsgemisch kann selbstverständlich auch bis zu einer Säurezahl kleiner als 5 polykondensiert werden, ohne daß die genannten Nachteile bei der nachfolgenden Alkoxylierung wegen des hohen Wassergehalts auftreten. Da die Säurezahlen jedoch im Bereich kleiner als 10 immer langsamer reduziert werden, bedarf es hierzu langer Polykondensationszeiten, so daß eine Verkürzung der Polykondensationszeit verbunden mit hoher Raumzeitausbeute nur noch in erheblich geringerem Ausmaße erfolgt.

Sobald das Veresterungsgemisch eine Säurezahl von 20 bis 5 erreicht hat, wird die Atmosphäre über dem Polykondensat im Reaktionsgefäß durch Einbringen mindestens eines unter den Reaktionsbedingungen inerten Gases, beispielsweise durch Durchströmen lassen des Veresterungsgemisches und Verdrängung der wasserdampfhaltigen Atmosphäre inertisiert. Als Inertgase verwendet werden beispielsweise Edelgase, wie z.B. Helium oder Argon, oder insbesondere Stickstoff. Vor, während und/oder nach der Inertisierung läßt man das erhaltene Polykondensat auf eine Temperatur von 100° bis 170°C, vorzugsweise von 150 bis 160°C, die Reaktionstemperatur der Alkoxylierung, abkühlen.

Erfindungsgemäß wird das erhaltene Polykondensat (b) mit Alkylenoxid in Gegenwart mindestens eines tertiären Amins aus der Gruppe N-Methylimidazol, Diazabicyclo[2,2,2,]octan, Diazabicyclo[5,4,0,]undec-7-en und Pentamethyl-diethylentriamin oder einer Mischung aus mindestens zwei der genannten Verbindungen als Katalysator alkoxiliert. Anwendung als Katalysator finden vorzugsweise Diazabicyclo[5,4,0]undec-7-en und/oder Pentamethyl-diethylentriamin. Die Katalysatoren werden schon aus Kostengründen und um eventuell die nachfolgende Polyisocyanat-polyadditionsreaktion nicht zu beeinflussen, in wirksamen, jedoch möglichst geringen Mengen eingesetzt. Bewährt haben sich beispielsweise Mengen von 0,001 bis 1 Gew.-%, vorzugsweise von 0,001 bis 0,1 Gew.-% und insbesondere von 0,001 bis 0,04 Gew.-%, bezogen auf das Gewicht des Polykondensats.

Zur Alkoxylierung der Carboxylgruppen werden 1,2-Propylenoxid, Mischungen aus 1,2-Propylenoxid und Ethylenoxid und vorzugsweise Ethylenoxid eingesetzt. Zweckmäßigerweise verwendet werden pro Carboxylgruppe des Polykondensats 1 bis 5 Mole, vorzugsweise 1,05 bis 1,5 Mole, Alkylenoxid. Die Alkylenoxide können dem Polykondensat portionsweise oder kontinuierlich gasförmig zugeführt werden. Vorzugsweise werden sie jedoch in flüssiger Form kontinuierlich dem Polykondensat einverleibt. Die Alkoxylierungsreaktion wird vorteilhafterweise bei einer Temperatur von 150° bis 160°C, wie bereits dargelegt wurde und unter einem Druck von 1 bis 10 bar, vorzugsweise von 2 bis 3,5 bar durchgeführt. Nach Erreichen einer Säurezahl von kleiner 1, hierzu sind üblicherweise Reaktionszeiten von 0,5 bis 4 Stunden, vorzugsweise von 1 bis 2 Stunden erforderlich, wird die Alkoxylierung beendet. Sofern die Polykondensatmischung noch freies monomeres Alkylenoxid enthält, wird dieses zweckmäßigerweise unter vermindertem Druck abdestilliert.

Die nach dem erfindungsgemäßen Verfahren hergestellten Polyester-polyole besitzen eine Säurezahl von kleiner als 1, vorzugsweise von 0,2 bis 0,8, eine Hydroxylzahl von 20 bis 400, vorzugsweise von 40 bis 70 und eine Funktionalität von 2 bis 3. Zur Reduzierung der Säurezahl von 20 bis 5 auf kleiner als 1 wird pro Carboxylgruppe durchschnittlich ein Mol Alkylenoxid verestert. Die Polyester-polyole finden insbesondere Verwendung zur Polyurethanherstellung, wie z.B. Polyurethan-Schaumstoffen oder-Elastomeren, nach dem Polyisocyanat-polyadditionsverfahren.

Vergleichsbeispiel A

92,28 Gew.-Teile Adipinsäure, 28,94 Gew.-Teile Ethandiol und 20,99 Gew.-Teile 1,4-Butandiol wurden gemischt und unter Rühren bei 210°C in Gegenwart von 10 ppm Zinndioctoat als Veresterungskatalysator zunächst bei Normaldruck und nach Erreichen einer Säurezahl von 30 unter einem Druck von 50 mbar verestert. Nach einer Polykondensationszeit von 24 Stunden erhielt man ein Ethandiol-1,4-Butandiol-polyadipat mit einer Hydroxylzahl von 55,2, einer Säurezahl von 0,8, einer Viskosität bei 75°C von 650 m.Pa.s und einer Jodfarbzahl von 1 bis 2.

### Beispiel 1

94,87 Gew.-Teile Adipinsäure, 28,11 Gew.-Teile Ethandiol und 20,40 Gew.-Teile 1,4-Butandiol wurden analog den Angaben des Vergleichsbeispiels bis zu einer Säurezahl von 13,5 verestert. Hierzu war eine Polykondensationszeit von ungefähr 10 Stunden erforderlich.

Anschließend ließ man das erhaltene Polykondensationsgemisch auf 150°C abkühlen, inertisierte mit Stickstoff unter einem Druck von 3,4 bar und fügte dem Polykondensationsgemisch unter Rühren 0,0285 Gew.-Teile Methylimidazol (0,03 Gew.-%, bezogen auf Polykondensat) hinzu. Danach wurden der Reaktionsmischung innerhalb von 20 Minuten 1,2 Gew.-Teile flüssiges Ethylenoxid (1,05 Mol pro Mol Carboxylgruppe) einverleibt. Der sich hierbei aufbauende Druck von ungefähr 6 bar sank innerhalb von 2 Stunden auf den Ausgangswert von 3,4 bar. Während das Polyesterpolyol bei 50 bis 10 mbar entgast wurde, ließ man es auf die Abfülltemperatur von 85°C abkühlen. Nach einer Polykondensations-und Ethoxylierungszeit von insgesamt 12 Stunden besaß das erhaltene Ethandiol-1,4-Butandiol-polyadipat eine Hydroxylzahl von 51,8, eine Säurezahl von 0,8, eine Viskosität bei 25°C von 780 m.Pa.s und eine Jodfarbzahl von 1.

### Beispiele 2 bis 9 und Vergleichsbeispiele B-C

Ein Veresterungsgemisch aus 94,87 Gew.-Teilen Adipinsäure, 28,11 Gew.-Teilen Ethylenglykol und 20,40 Gew.-Teilen Butandiol-1,4 wurde unter Rühren in Abwesenheit eines Veresterungskatalysators bei 210°C zunächst bei Normaldruck und nach Erreichen einer Säurezahl von 35 unter einem Druck von 100 mbar bis zu einer Säurezahl von 13,5 polykondensiert. Die Polykondensationszeit betrug 10 Stunden.

Das erhaltene Polykondensat ließ man auf die Alkoxylierungstemperatur abkühlen, inertisierte mit Stickstoff unter einem Druck von 3,4 bar und ethoxilierte in Abwesenheit oder Gegenwart von Katalysatoren in unterschiedlichen Mengen. Hierzu wurde der Polykondensatmischung innerhalb von 20 Minuten 1,2 Gew.-Teile flüssiges Ethylenoxid (1,05 Mol pro Mol Carboxylgruppe) hinzugefügt. Nach Erreichen einer Säurezahl von kleiner als 1 wurde die Ethoxilierung beendet, das Ethandiol-1,4-Butandiolpolyadipat unter einem Druck von 50 bis 10 mbar zur Abtrennung von überschüssigem Ethylenoxid und anderer flüchtiger Bestandteil entgast und hierbei auf 85°C abkühlen lassen.

Die angewandte Ethoxilierungstemperatur, die Art und Menge des Katalysators, die Ethoxilierungszeit und die Kenndaten der erhaltenen Ethandiol-1,4-Butandiol-polyadipate sind in Tabelle 1 zusammengefaßt.

Tabelle 1

Reaktionsbedingungen und Kenndaten der erhaltenen
Ethandiol-1,4-Butandiol-polyadipate.

| Beispiel Vergleichs- beispiel | Ethoxilierungs- temperatur [°C] | Katalysator Art | Menge [Gew.-%]+ | Ethoxilierungs- zeit [Stdn.] | Säure- zahl | Hydroxyl- zahl | Jodfarbzahl |
|---|---|---|---|---|---|---|---|
| 2 | 80 | Methylimidazol | 0,05 | > 8 | 6 | 53,1 | nicht bestimmt |
| 3 | 120 | " | 0,05 | 4 | 0,4 | 52,3 | " " |
| 4 | 150 | " | 0,05 | 0,5 | 0,5 | 49,8 | " " |
| 5 | 150 | " | 0,01 | 3 | 0,2 | 47,5 | " " |
| 6 | 150 | " | 0,03 | 2 | 0,3 | 52,3 | " " |
| 7 | 150 | " | 0,06 | 0,3 | 0,2 | 52,1 | " " |
| 8 | 150 | DBU[1] | 0,01 | 1,5 | 0,2 | 49,9 | <1 |
| 9 | 150 | PDT[2] | 0,03 | 2,0 | 0,4 | 52,3 | <1 |
| B | 150 | – | – | >30 | 5,4 | 51,0 | nicht bestimmt |
| C | 150 | Thiodiglykol | 0,5 | 6 | 0,8 | 52,8 | " " |

+ Die Gew.-% sind bezogen auf das Gewicht des Polykondensats.

[1] DBU: Diazabicyclo [5.4.0]undec-7-ene

[2] PDT: Pentamethyl-diethylentriamin

Beispiel 10

Ein Veresterungsgemisch aus

56,12 Gew.-Teilen Adipinsäure,
10,09 Gew.-Teilen 1.4-Butandiol,
21,94 Gew.-Teilen 1.5-Pentandiol und
11.84 Gew.-Teilen 1.6-Hexandiol

wurde analog den Angaben von Beispiel 2 in 7 Stunden bis zu einer Säurezahl von 11 polykondensiert.

Das erhaltene Polykondensat ließ man auf 150°C abkühlen, inertisierte mit Stickstoff unter einem Druck von 3,4 bar und ethoxilierte in Gegenwart von 0,01 Gew.-Teilen Methylimidazol als Katalysator mit 0,74 Gew.-Teilen Ethylenoxid (1,0 Mol pro Mol Carboxylgruppe) in 2,5 Stunden.

Das erhaltene Polyester-polyol besaß eine Säurezahl von 0,1, eine Hydroxylzahl von 72,6, eine Viskosität bei 25°C von 4 665 m.Pa.s und eine Jodfarbzahl von 1.

Beispiel 11

Ein Veresterungsgemisch aus

78,92 Gew.-Teilen Adipinsäure,
23,33 Gew.-Teilen 1.4-Butandiol,
18,25 Gew.-Teilen Neopentylglykol und
18,29 Gew.-Teilen 1.6-Hexandiol

wurde analog den Angaben von Beispiel 2 in 14 Stunden bis zu einer Säurezahl von 7,3 polykondensiert.

Das erhaltene Polykondensat ließ man auf 150°C abkühlen, inertisierte mit Stickstoff unter einem Druck von 3,4 bar und ethoxilierte in Gegenwart von 0,02 Gew.-Teilen Methylimidazol als Katalysator mit 0,72 Gew.-Teilen Ethylenoxid (1,05 Mol pro Mol Carboxylgruppe) in 2,5 Stunden.

Das erhaltene Polyester-polyol besaß eine Säurezahl von 0,4, eine Hydroxylzahl von 60,1 und eine Viskosität bei 25°C von 11628 m.Pa.s.

**Ansprüche**

1. Verfahren zur Herstellung von Polyester-polyolen mit einer Säurezahl kleiner als 1 durch

a) Schmelzkondensation von Polycarbonsäuren und/oder deren Anhydriden und mehrwertigen Alkoholen und

b) Alkoxylierung der erhältenen Polykondensate

dadurch gekennzeichnet, daß man

(i) das Veresterungsgemisch (a) bis zu einer Säurezahl von 20 bis 5 polykondensiert und

(ii) das erhaltene Polykondensat (b) mit Alkylenoxid in Gegenwart mindestens eines tertiären Amins aus der Gruppe N-Methylimidazol, Diazabicyclo[2,2,2]octan, Diazabicyclo[5,4,0]undec-7-en und Pentamethyl-diethylentriamin als Katalysator alkoxyliert.

2. Verfahren nach Anspruch 1, dadurch gekennzeichnet, daß die Polyester-polyole eine Funktionalität von 2 bis 3 und eine Hydroxylzahl von 20 bis 400 besitzen.

3. Verfahren nach Anspruch 1, dadurch gekennzeichnet, daß das Veresterungsgemisch (a) bei einer Temperatur von 150°C bis 250°C und gegebenenfalls unter vermindertem Druck polykondensiert wird.

4. Verfahren nach Anspruch 1, dadurch gekennzeichnet, daß das Veresterungsgemisch (a) bei einer Temperatur von 160°C bis 250°C bis zu einer Säurezahl von 80 bis 30 unter Normaldruck und anschließend bis zu einer Säurezahl von 20 bis 5 unter einem Druck von kleiner als 500 mbar polykondensiert wird.

5. Verfahren nach Anspruch 1, dadurch gekennzeichnet, daß das Veresterungsgemisch (a) in Abwesenheit von üblichen Veresterungskatalysatoren polykondensiert wird.

6. Verfahren nach Anspruch 1, dadurch gekennzeichnet, daß das N-Methylimidazol, Diazabicyclo[2,2,2]octan, Diazabicyclo[5,4,0]undec-7-en oder Pentamethyl-diethylentriamin oder Mischungen aus mindestens zwei der genannten Verbindungen als Katalysator in einer Mengen von 0,001 bis 1,0 Gew.-%, bezogen auf das Polykondensatgewicht, verwendet werden.

7. Verfahren nach Anspruch 1, dadurch gekennzeichnet, daß als Alkylenoxid Ethylenoxid verwendet wird.

8. Verfahren nach Anspruch 1, dadurch gekennzeichnet, daß pro Carboxylgruppe der Polykondensate (b) 1 bis 5 Mole Alkylenoxid verwendet werden.

9. Verfahren nach Anspruch 1, dadurch gekennzeichnet, daß die Alkoxylierung bei Temperaturen von 100° bis 170°C und unter einem Druck von 1 bis 10 bar durchgeführt wird.

10. Verfahren nach Anspruch 1, dadurch gekennzeichnet, daß zur Herstellung der Polyester-polyole als Polycarbonsäuren Adipinsäure oder Mischungen aus Adipin-, Glutar-und Bernsteinsäure verwendet werden.